# FASCICULE DE BREVET EUROPEEN

(11) **EP 0 880 122 B1**
(45) Date de publication et mention de la délivrance du brevet: **24.09.2003**
(21) Numéro de dépôt: 98401221.1
(22) Date de dépôt: 20.05.1998
(51) Int. Cl.: G08G 5/06, B64F 1/00

(54) **Procédé et système de guidage d'un avion vers un poste d'accostage**
Verfahren und System zur Leitung eines Flugzeugs zu einer Andockstation
Aircraft docking guidance method and system

(30) Priorité: 20.05.1997 FR 6102397
(43) Date de publication de la demande: 25.11.1998
(73) Titulaire: SAGEM S.A., 75015 Paris (FR)
(72) Inventeur: De Cremiers, Michel, 75116 Paris (FR)
(74) Mandataire: Fort, Jacques

(56) Documents cités:
- DE-A- 4 009 668
- DE-A- 4 238 151
- DE-A- 4 301 637
- DE-A- 4 406 821
- US-A- 3 729 262
- US-A- 3 872 283

## Description

La présente invention concerne les procédés et systèmes destinés à guider un avion vers un poste d'accostage dans un aéroport, permettant de fournir au pilote de l'avion des indications visuelles lui permettant d'arriver de façon sûre et précise au poste d'accostage auquel il est affecté.

On a déjà proposé de nombreux systèmes destinés à remplir ces fonctions. En particulier, on a proposé (WO96/12265) un système de balayage par impulsions laser, associé à un système informatique. L'avion est tout d'abord repéré par l'apparition d'échos en nombre suffisant. Puis il est suivi par télémétrie laser. Il peut être identifié par reconnaissance de forme. Un tel système est très sensible aux conditions climatiques et en particulier au brouillard. De plus, il est très complexe.

On a également proposé d'utiliser un système stéréographique comportant des caméras vidéo visant le pare-brise de la cabine de pilotage de l'avion (WO96/09207). Ce système est très sensible aux conditions climatiques et aussi aux variations de l'éclairage ambiant.

La présente invention vise notamment à fournir un procédé et un dispositif de guidage répondant mieux que ceux antérieurement connus aux exigences de la pratique, notamment en ce qu'il est très peu sensible à l'éclairement et aux conditions climatiques et en ce qu'il fait surtout appel à des composants électro-optiques déjà largement utilisés dans d'autres domaines.

Pour arriver à ce résultat, l'invention propose notamment un procédé de guidage d'un avion vers un poste d'accostage suivant lequel :
- on forme, à partir d'un point déterminé à proximité du poste d'accostage, une image à deux dimensions d'une zone d'approche vers le poste, en infrarouge thermique,
- on repère, dans l'image, l'apparition et les emplacements d'éléments caractéristiques de la signature infrarouge d'un train d'atterrissage d'un avion lorsqu'il arrive dans ladite zone d'approche,
- on calcule, à partir des caractéristiques mémorisées de l'avion attendu au poste et des dits emplacements, la distance entre l'avion et le poste ainsi que l'écart entre la trajectoire instantanée de l'avion et la trajectoire d'arrivée au poste d'accostage dans une orientation déterminée de l'avion et on communique au pilote de l'avion des indications sur l'écart entre la position de l'avion et la trajectoire d'arrivée au poste d'accostage ou des consignes de roulement vers le poste, élaborées à partir du résultat du calcul.

Avantageusement, la signature infrarouge s'appuie sur des éléments de l'avion à contraste thermique après l'atterrissage, tels que les pneus ou autres éléments géométriquement convenablement répartis.

Grâce à l'utilisation d'une image dans l'infrarouge thermique, le procédé est peut sensible à l'éclairement ambiant et au brouillard, donc très fiable. Le choix du repérage des pneumatiques présente de son côté de nombreux avantages. L'écartement relatif des trois trains de roues étant connu pour l'avion attendu, on peut en déduire la distance de l'avion, avec une précision d'autant plus importante que l'écartement entre les trains de roues est plus élevé. Les pneumatiques d'un avion qui vient d'atterrir ont pris une température supérieure à celle de l'ambiance, du fait du freinage, avec un écart qui varie peu et ils sont facilement localisés. Enfin, la détection des points chauds dans l'image s'effectue par des algorithmes de traitement simples, déjà très largement utilisés dans le domaine militaire, n'exigeant que des temps de calcul courts sur un micro-ordinateur tel qu'un ordinateur industriel standard.

Dans un mode avantageux de réalisation, les indications ou consignes sont fournies au pilote par un panneau lumineux placé à proximité du poste. Par exemple, les indications fournies par le panneau peuvent comporter l'identification du poste d'accostage vers lequel se dirige l'avion, l'identification de l'avion attendu (pour vérification par le pilote), une indication de distance entre l'avion et le poste d'accostage et une indication des changements d'orientation nécessaires, sous forme de l'écart de l'avion par rapport à une trajectoire de consigne, et/ou d'une indication sur le braquage à donner au train avant.

Une solution, qui a l'avantage de fournir une indication claire et immédiatement utilisable, consiste à donner au pilote une indication visuelle sous forme d'une bande verticale dont la position par rapport à une ligne médiane du panneau d'affichage indique l'écart du train avant par rapport à la ligne d'approche théorique. Plusieurs bandes de couleurs différentes (par exemple vert, ambre et rouge) peuvent être prévues pour indiquer si la correction à effectuer est faible, moyenne ou forte. L'indication fournie peut tenir compte de l'évolution de la trajectoire, prédite à partir d'images successives, et notamment de la constatation qu'elle tend à se rapprocher ou à s'éloigner de la ligne d'approche théorique de consigne.

Pour parfaire la précision du guidage lorsque l'avion est proche du poste d'accostage, une seconde caméra peut être prévue. Mais il est préférable d'utiliser un télémètre laser à balayage dans les deux dimensions, qui sera utilisé pour repérer et suivre le nez de l'avion. Etant donné que ce télémètre laser n'est utilisé qu'à une courte distance, ne dépassant pratiquement pas 30 mètres, sa sensibilité au brouillard ne représente plus un inconvénient. Etant donné que l'emplacement approximatif du nez peut être déduit des indications fournies par la caméré thermique, il suffit d'une capacité de balayage faible en azimut. En revanche, une plage de balayage vertical d'environ 100° sera en général nécessaire pour suivre l'avion lors de son approche.

Une comparaison entre la mesure de la distance entre les images des roues et la mesure de la distance du nez de l'avion permet, par comparaison avec une base de données contenant les caractéristiques de l'avion attendu, d'authentifier l'avion.

Une comparaison entre les indications de distance fournies par le calculateur à partir de l'image infrarouge et par le télémètre laser permet de vérifier la cohérence des mesures et d'éliminer la possibilité qu'une erreur sur la mesure de la distance reste ignorée.

L'invention propose également un système de guidage d'un avion vers un poste d'accostage, permettant de mettre en oeuvre le procédé ci-dessus, comprenant :
- une caméra thermique placée à proximité du poste d'accostage et apte à former une image à deux dimensions d'une zone d'approche vers le poste ;
- des moyens d'extraction de points et de lignes dans l'image thermique permettant d'identifier les pneumatiques des roues du train d'atterrissage d'un avion dans la zone d'approche et de localiser leur emplacement dans l'image ;
- et des moyens de calcul mémorisant les caractéristiques de l'avion attendu au poste et fournissant, à partir des dites caractéristiques et des dits emplacements, la distance entre l'avion et le poste ainsi que l'écart latéral entre la trajectoire instantanée de l'avion et une trajectoire nominale d'arrivée de l'avion au poste d'accostage dans une orientation déterminée ;
- et des moyens pour communiquer au pilote des indications sur ledit écart ou des consignes de roulement vers le poste, élaborées à partir du résultat du calcul.

Les caractéristiques ci-dessus ainsi que d'autres apparaîtront mieux à la lecture de la description qui suit d'un mode particulier de réalisation, donné à titre d'exemple non limitatif.

La description se réfère aux dessins qui l'accompagne, dans lesquels :
- la figure 1 est un schéma en plan montrant le trajet d'approche d'un avion vers un poste d'accostage et les notations utilisées ;
- la figure 2 est une vue schématique en élévation montrant l'implantation d'un panneau d'affichage et d'un boîtier capteur par rapport au poste d'accostage ;
- la figure 3 est une vue schématique en élévation montrant une constitution possible du boîtier capteur ;
- la figure 4 est un schéma de principe montrant les liaisons entre les éléments du boîtier capteur et un calculateur de guidage ;
- la figure 5 est un synoptique possible du système ;
- la figure 6 est un organigramme de principe du procédé mis en oeuvre par le système ;
- les figures 7A à 7E montrent l'aspect donné au panneau d'affichage pour diverses conditions d'approche.

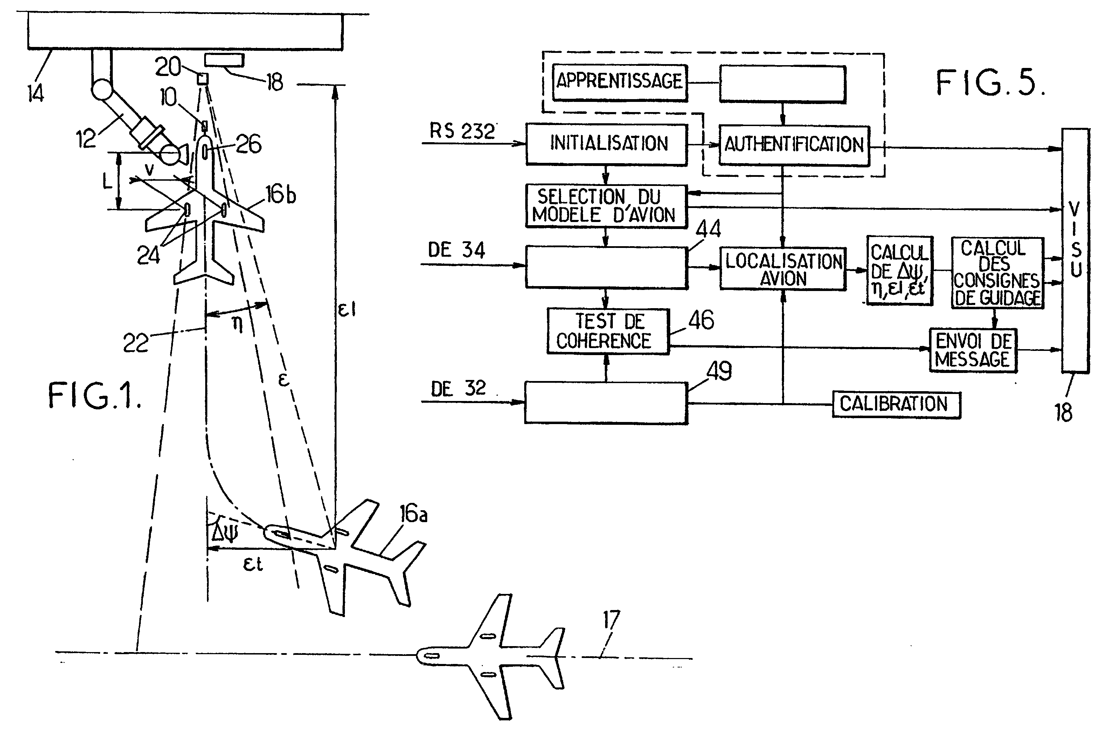

La figure 1 montre schématiquement le poste d'accostage d'un avion, matérialisé par une marque 10 au sol ; cette marque indique par exemple l'emplacement optimum pour accoler à l'avion une passerelle 12 d'embarquement à partir d'un aéroport 14 et de débarquement. Un avion qui vient d'atterrir s'est vu affecter un poste d'accostage particulier, auquel il arrive en suivant d'abord une voie de circulation ou "taxiway" 17, puis un trajet qui doit l'amener, avec une orientation déterminée, à l'emplacement matérialisé par la marque 10, comme illustré sur la figure 1. Un avion devant arriver au poste d'accostage montré sur la figure 1 quitte la voie de circulation et tourne vers l'aéroport en prenant par exemple successivement les positions indiquées en 16a et 16b.

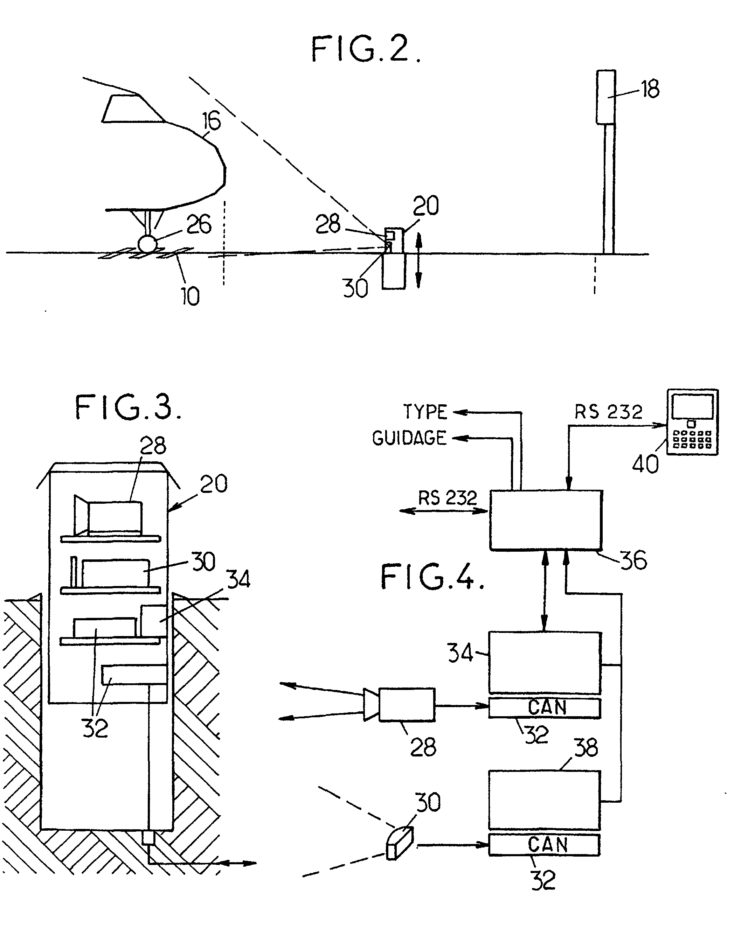

Comme dans les systèmes déjà existants, chaque poste d'accostage est muni d'un panneau de visualisation 18 (figures 1 et 2) placé à une hauteur au-dessus du sol telle qu'elle permet une vision facile par le pilote (4 à 6 mètres en général).

Le système comprend un boîtier capteur 20 placé entre le poste d'accostage et l'aéroport, au-dessus du sol. Dans un mode avantageux de réalisation, il est contenu dans une tourelle qu'on escamote éventuellement dans un logement au sol en dehors des périodes d'utilisation. Le boîtier capteur 20, des organes de traitement qui sont décrits plus loin et le panneau d'affichage 18 permettent de remplir au minimum les fonctions suivantes :
- guidage en azimut (ou latéral), donnant au pilote des indications lui permettant d'amener l'avion jusqu'à une trajectoire d'approche de consigne, généralement matérialisée au sol par une ligne droite 22 (figure 1),
- un guidage en rapprochement, fournissant au pilote une indication de la distance restant à parcourir jusqu'à l'arrêt final.

En règle générale, la distance qui sépare la piste de circulation 17 au poste de stationnement est comprise entre 80 et 100 mètres et les avions peuvent arriver indifféremment par la droite ou par la gauche.

Comme cela a déjà été indiqué plus haut, le boîtier capteur utilise essentiellement, au moins au début du guidage, l'image de l'emplacement des pneumatiques d'un avion 16 en approche. En règle générale, le guidage en rapprochement n'interviendra que lorsque la distance entre l'avion et son poste de stationnement est au-dessous d'une valeur déterminée, par exemple 15 mètres.

Le guidage en azimut se fonde sur la reconnaissance des pneumatiques de l'avion qui se présente en approche. L'écartement entre les trains principaux 24 et le train avant 26 de chaque avion susceptible d'accoster est mémorisé dans le centre informatique de l'aéroport. Lorsqu'un avion a été affecté par la tour de contrôle à un poste d'accostage particulier, le type d'avion est communiqué à un calculateur de guidage propre à ce poste d'accostage, lequel possède déjà ses caractéristiques.

Le boîtier capteur 20 comprend au moins une caméra thermique 28, opérant généralement dans la bande 8-12 µm, ayant un champ angulaire horizontal faible, généralement compris entre 12° et 20°. Ce champ permet d'avoir une bonne définition lorsque l'avion approche de son poste de stationnement tout en couvrant, à une distance de l'ordre de 100 mètres, un champ suffisant pour repérer les pneumatiques des avions circulant sur le taxiway 17 ou commençant à se rapprocher de la ligne 22. On peut utiliser des caméras existantes ayant un détecteur matriciel, pouvant être implantées sans difficulté dans une tourelle placée à une dizaine de mètres du poste de stationnement, sur la ligne 22 en général. L a caméra peut avoir un champ faible en élévation, puisque ce sont les pneumatiques qui sont seuls visés en général. Cela permet également de placer la caméra, lors du fonctionnement, à une hauteur faible au-dessus du sol et de limiter la saillie de la tourelle à quelques dizaines de centimètres.

Dans le mode avantageux de réalisation représenté, le boîtier capteur contient également un télémètre laser à balayage 30, d'un type déjà disponible pour des applications de mesure en trois dimensions en extérieur, donnant une précision en distance de ± 10 cm et ayant une portée d'environ 50 mètres par temps clair. La portée d'un tel télémètre, fonctionnant par exemple à 0,9 µm, est réduite en cas de brouillard, mais reste suffisante pour permettre le guidage de l'avion à la fin de son roulage. Le télémètre 30 peut être prévu pour effectuer un balayage vertical dans une plage de 100° environ et être orientable transversalement dans une plage de quelques degrés autour de la ligne 22.

La tourelle peut contenir également des moyens de servitude 32 et un moteur 34 de montée et descente de la tourelle, par exemple à entraînement par pignon et crémaillère.

Les deux capteurs (caméra infrarouge 28 et télémètre laser à balayage 30) sont reliés à des électroniques de pré-traitement. Dans le cas illustré sur la figure 4, chaque capteur attaque un convertisseur analogique-numérique 32. L'image numérisée provenant de la caméra 28 est traitée par un processeur d'image 34, permettant d'identifier l'emplacement des pneumatiques et de fournir leurs coordonnées dans l'image à un calculateur de guidage 36. Ce calculateur reçoit également, au cours de l'approche finale, les données de distance fournies par un circuit d'acquisition 38 et de pré-traitement des informations fournies par le télémètre laser 30.

Un boîtier 40 de contrôle et de commande par un opérateur humain peut être prévu en secours, en cas de panne du réseau informatique. Ce boîtier permet de fournir les éléments nécessaires au fonctionnement du calculateur de guidage 36, notamment l'identification de l'avion attendu et ses caractéristiques, c'est-à-dire les écarts entre les trains de roues.

Lorsqu'un télémètre laser 30 est utilisé pour mesurer la distance du nez de l'avion au poste d'accostage, les indications fournies au calculateur comportent également la hauteur du nez et la distance horizontale entre le train de roues avant de l'avion et le nez, pour permettre une comparaison tenant compte de ce que la distance mesurée sera celle du nez de l'avion alors que la distance calculée sera celle des trains de roues principaux ou du train avant.

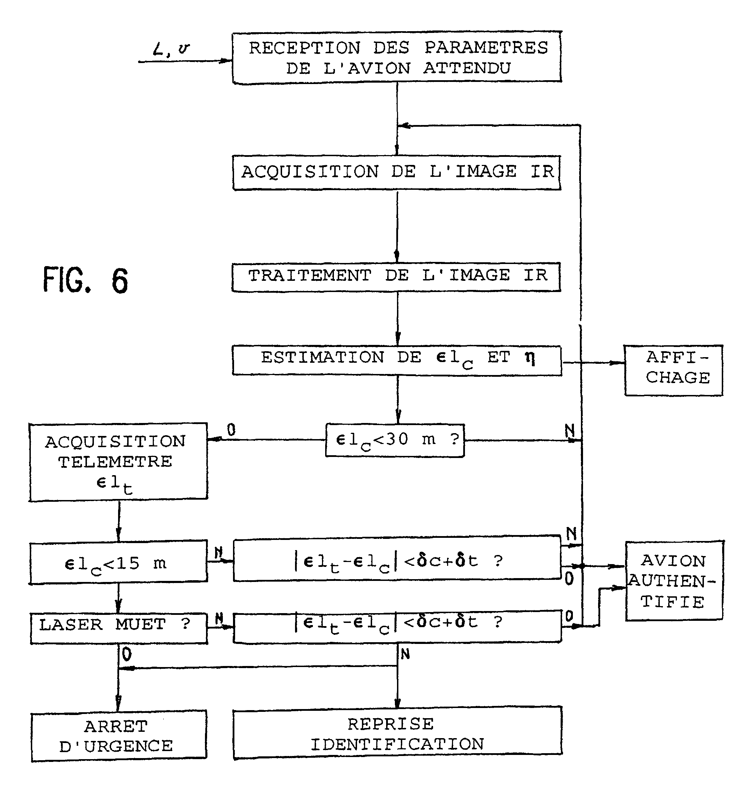

Le synoptique de traitement mis en oeuvre par le système peut être celui montré en figure 5, où les parties dans un cadre en tirets, correspondant à l'authentification de l'identité d'un avion attendu, sont optionnelles.

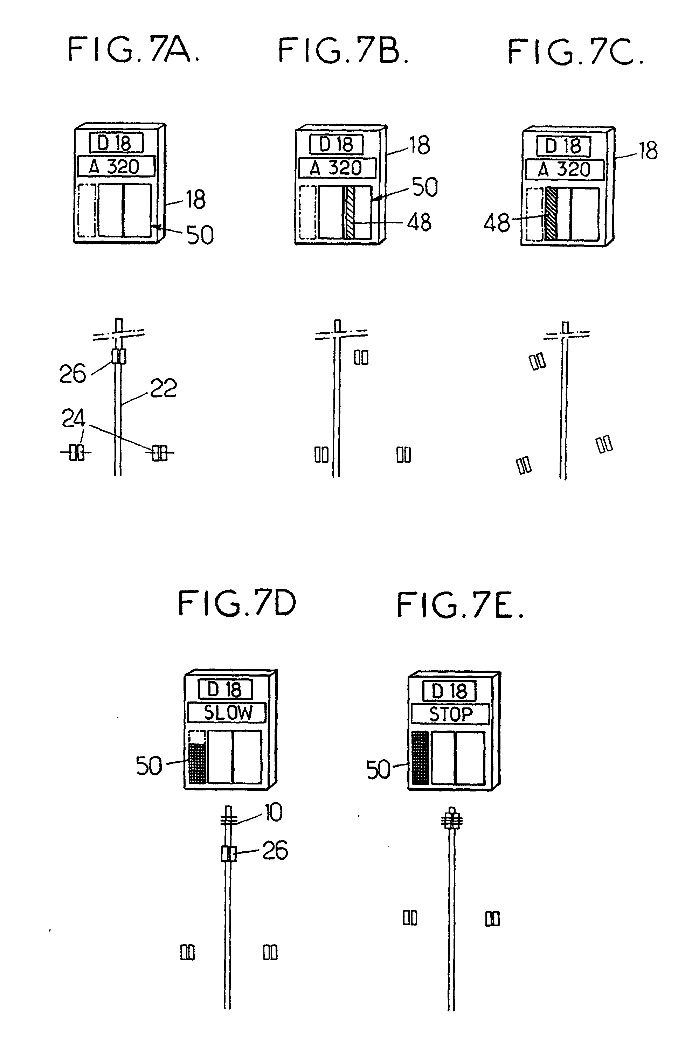

Lorsqu'un avion atterrit, il connaît son poste d'accostage. La tour de contrôle communique au calculateur 36 de ce poste, par le réseau informatique de l'aéroport), l'heure d'atterrissage de l'avion attendu et le type d'avion (si les caractéristiques de tous les avions susceptibles d'être reçus sont déjà mémorisées dans le calculateur) ou les caractéristiques de cet avion (empattement L, voie v, hauteur du nez au-dessus du sol, distance horizontale entre le nez et le train avant, etc.). A l'issue de cette initialisation, le panneau d'affichage 18 est commandé par le calculateur pour indiquer au pilote le type d'avion attendu et permettre ainsi un contrôle visuel ; une plage est réservée à cet effet sur le panneau d'affichage 18 (Figures 7A à 7C).

Le boîtier 20 est alors sorti de son logement et la caméra thermique 28 est activée avant l'heure d'arrivée prévue. La caméra repère les avions sur la piste de circulation 17 au fur et à mesure qu'ils entrent dans le champ, à une distance qui est connue. L'emplacement des pneumatiques est détecté par extraction des points et lignes caractéristiques dans l'image thermique en 44 et par test de cohérence avec les caractéristiques mémorisées en 46. On obtient ainsi deux résultats.

D'une part il est possible, par comparaison avec les données mémorisées, de faire une identification provisoire.

D'autre part il est possible de différencier le train avant des trains principaux et, par poursuite ultérieure, de discriminer ultérieurement dans l'image.

### DEBUT D'APPROCHE

Lorsque l'avion identifié provisoirement commence à tourner pour se rapprocher de la ligne 22, l'analyse de l'image fournie par la caméra permet de mesurer l'écart et (erreur en latéral) et aussi, par comparaison entre d'une part L et v, d'autre part les distances entre les trains de roues dans l'image, l'angle Δψ de l'axe de l'avion avec la ligne 22 (erreur de cap). Il est également possible de calculer l'angle η, c'est-à-dire l'azimut de l'avion par rapport à la ligne 22. Par comparaison entre les images successives prises à intervalles de temps dt, la vitesse de roulage V de l'avion peut être calculée par la formule dεt/dt = V sin Δψ. La caméra 28 et le calculateur de guidage 36 permettent ainsi de fournir les indications destinées à être affichées sur le panneau 18. Ces indications peuvent prendre des formes très diverses.

Dans le cas particulier montré en figures 7A à 7E, les indications comportent, au cours de la phase d'approche lointaine plusieurs bandes verticales 48. La position de la bande éclairée par rapport au milieu d'une plage 50 informe le pilote sur le braquage qu'il doit donner au train avant orientable.

Sur la figure 7A, la bande verticale est confondue avec la ligne médiane, ou absenté.

Sur la figure 7B, la position de la bande indique au pilote qu'il doit tourner légèrement à gauche.

Sur la figure 7C, qui correspond au cas où l'avion est déjà déporté vers la gauche et tend à s'écarter encore de la trajectoire nominale, la présence de la bande à l'extrême gauche indique au pilote qu'il doit tourner fortement à gauche.

Le calculateur peut être prévu pour afficher le signal STOP là où est affichée l'identification de l'avion, en cas d'écart excessif, non corrigeable.

En pratique, l'affichage peut être réduit à trois bandes de chaque côté de la ligne médiane, chaque bande ayant une couleur différente, par exemple verte à proximité de la ligne médiane pour une correction faible, ambre pour une correction moyenne et rouge pour une correction forte.

### APPROCHE FINALE

Lorsque la distance ∈l_{c}, estimée à partir de l'image thermique avec une précision δ_{c} relativement faible, devient inférieure à une valeur déterminée, par exemple 30 mètres, le télémètre laser 30 est mis en service. A ce stade, l'avion en approche n'a été identifié que provisoirement. Grâce aux indications fournies par traitement de l'image thermique et aux données mémorisées, la recherche du nez de l'avion (point le plus proche du poste de stationnement) peut être limitée à un domaine étroit en azimut. Les points et lignes caractéristiques de l'avion peuvent être relevés, par exemple dans une section verticale, en 48. En cas d'absence d'acquisition, un message d'arrêt peut être affiché.

En cas de fonctionnement normal, un affichage de distance commence à être effectué sur le panneau 18, avec en plus réalisation d'un test de cohérence en 46. Dans le cas illustré sur les figures 7D et 7E, la partie gauche du panneau 18 constitue une barre de défilement 50 qui apparaît lorsque l'avion est à une distance inférieure à une valeur déterminée du poste d'accostage et qui se remplit progressivement jusqu'à l'arrêt final de l'avion. La figure 7D correspond au cas où l'avion est correctement aligné et se rapproche de la marque 10 à une vitesse excessive. Le calculateur affiche alors une consigne de ralentissement (LENT ou SLOW). Enfin le signal STOP apparaît lorsque l'avion est à poste (Figure 7E).

La figure 6 donne un exemple d'organigramme utilisable pour l'authentification et le guidage visuel dans le cas d'un système du genre ci-dessus, utilisant une image thermique et une télémétrie.

On retrouve, sur la figure 6, l'inialisation (réception des paramètres de l'avion attendu). Une boucle est ensuite parcourue aussi longtemps que la distance estimée de l'avion εl_{c} est supérieure à une valeur déterminée, par exemple 30 mètres ; la cadence de parcours peut être d'une vingtaine de Hertz. L'acquisition comprend l'image infrarouge, le traitement de cette image et l'estimation de εl_{c} et η.

En-deçà de εl_{c} = 30 mètres, le calculateur 36 prend en compte les informations délivrées par le télémètre laser, qui lui fournit les éléments permettant de faciliter la recherche de l'avion, notamment le nez qui est le point le plus saillant. La précision δt de l'évaluation εlₜ de la distance ainsi obtenue, de quelques dizaines de cm, est meilleure que la précision δ_{C} résultant du calcul à partir de l'image thermique. Le calculateur dispose ainsi de deux valeurs εl_{C} et εlₜ de la distance.

Des tests de distance sur εl_{C} sont poursuivis, le guidage en distance ne commençant que lorsque la distance εl est inférieure à une autre valeur, inférieure à la première, par exemple 15 mètres.

Aussi longtemps que εl est supérieur à 15 mètres, seul un test de cohérence 60 est effectué. Il consiste à vérifier que l'écart entre les deux valeurs |ε1ₜ-ε1_{c}l est inférieur à lδt+δc| (si une valeur εlₜ est disponible). Les valeurs εl comparées tiennent compte de la distance entre les points de l'avion visés, c'est-à-dire d'une part le nez et d'autre part les roues.

Lorsque le test est "bon", on peut considérer que l'identité de l'avion a été authentifiée. Cette authentification peut être confirmée par une comparaison entre le profil vertical de l'avion donné par balayage laser et la forme mémorisée.

Lorsque εl devient inférieur à 15 mètres, une vérification est effectuée sur le laser. S'il ne donne aucune indication, un ordre "STOP" d'arrêt d'urgence est élaboré et affiché sur le panneau 18. Si au contraire une mesure est disponible, un nouveau test 62 de comparaison entre l'écart et la somme des précisions, identique au test 60, est effectué. Si l'écart est excessif, le processus d'identification est reprise et en même temps, un signal d'arrêt est affiché. Le guidage s'effectue comme indiqué plus haut jusqu'à l'arrêt au poste d'accostage.

## Revendications

1. Procédé de guidage d'un avion (16a) vers un poste d'accostage (12), suivant lequel :
- on forme, à partir d'un point déterminé à proximité du poste d'accostage, une image à deux dimensions d'une zone d'approche vers le poste, en infrarouge thermique,
- on repère, dans l'image, l'apparition et les emplacements des éléments caractéristiques (24, 26) de la signature infrarouge d'un avion lorsqu'il arrive dans ladite zone d'approche,
- on calcule, à partir des caractéristiques mémorisées de l'avion attendu au poste et des dits emplacements, la distance entre l'avion et le poste ainsi que l'écart entre la trajectoire instantanée de l'avion et la trajectoire d'arrivée au poste d'accostage dans une orientation déterminée de l'avion et on communique au pilote de l'avion des indications sur l'écart entre la position de l'avion et la trajectoire d'arrivée au poste d'accostage ou des consignes de roulement vers le poste, élaborées à partir du résultat du calcul.

2. Procédé selon la revendication 1, **caractérisé en ce que** la signature infrarouge s'appuie sur des éléments de l'avion à contraste thermique stable après l'atterrissage, tels que les pneus ou autres éléments géométriquement répartis.

3. Procédé selon la revendication 2, **caractérisé en ce qu'**on différencie les pneumatiques appartenant au train de roues avant des pneumatiques appartenant aux trains principaux par identification alors que l'avion se présente par le travers et par poursuite ultérieure.

4. Procédé selon la revendication 2 ou 3, **caractérisé en ce que**, une fois que la distance calculée à partir de l'image thermique (εl_{c}) est inférieure à une valeur déterminée, on mesure la distance entre l'avion et le poste d'accostage par télémétrie laser et on confirme l'indication (εlₜ) donnée par télémétrie par comparaison avec la distance calculée (εl_{C}).

5. Procédé selon la revendication 4, **caractérisé en ce qu'**on authentifie l'avion en approche par comparaison de son profil vertical déterminé par télémétrie à balayage avec un profil type et/ou par comparaison entre des indications de distance obtenues par télémétrie et par analyse de l'image infrarouge.

6. Système de guidage d'un avion (16a) vers un poste d'accostage (12), comprenant une caméra thermique (28) placée à proximité du poste d'accostage pour former une image à deux dimensions d'une zone d'approche vers le poste, des moyens d'extraction (34) de points et de lignes dans l'image thermique permettant d'identifier un avion dans la zone d'approche et d'indications de remplacement dans l'image ; des moyens de calcul (36) mémorisant les caractéristiques de l'avion attendu au poste et fournissant, à partir des dites caractéristiques et des dits emplacements, la distance entre l'avion et le poste ainsi que l'écart latéral entre la trajectoire instantanée de l'avion et une trajectoire nominale d'arrivée de l'avion au poste d'accostage dans une orientation déterminée ; et des moyens (18) pour communiquer au pilote des indications des indications sur ledit écart ou des consignes de roulement vers le poste, élaborées à partir du résultat du calcul.

7. Système selon la revendication 6, **caractérisé en ce que** les moyens de calcul sont programmés pour identifier les pneumatiques des roues du train d'atterrissage.

8. Système selon la revendication 6 ou 7, **caractérisé en ce qu'**il comprend de plus un télémètre laser (30) à balayage vertical de mesure de la distance du nez de l'avion et éventuellement du profil vertical de l'avion pour authentification par comparaison avec un profil mémorisé.

9. Système selon la revendication 6, 7 ou 8, **caractérisé en ce que** les moyens pour communiquer les indications comprennent un panneau d'affichage (18) portant l'indication du type de l'avion attendu et de l'écart par rapport à une trajectoire d'approche et d'arrêt nominal.

10. Système selon la revendication 9, **caractérisé en ce que** ledit panneau d'affichage comporte une zone présentant une ligne médiane verticale et des bandes individuellement illuminables de part et d'autre de la ligne verticale pour indiquer soit un écart du train avant par rapport à la trajectoire nominale, soit le sens dans lequel le train de roues avant doit être braqué.

11. Système selon la revendication 10, **caractérisé en ce que** les bandes ont une couleur différente selon l'importance de l'écart.

12. Système selon la revendication 10 ou 11, **caractérisé en ce que** le calculateur est prévu pour afficher sur le panneau une indication qui dépend d'une part de l'amplitude de l'écart et d'autre part d'une détermination si l'avion tend à se rapprocher ou à s'écarter de la trajectoire nominale.

## Patentansprüche

1. Verfahren zum Leiten eines Flugzeugs (16a) zu einer Andockstation (12), bei dem man:
- von einem bestimmten Punkt in Nähe der Andockstation aus ein zweidimensionales Wärmeinfrarot-Bild einer Zone der Annäherung an die Station erzeugt,
- man in dem Bild das Erscheinen und die Standorte der charakteristischen Elemente (24, 26) der Infrarotsignatur eines in dieser Annäherungszone ankommenden Flugzeugs lokalisiert,
- man aus den gespeicherten Merkmalen des an der Station erwarteten Flugzeugs und dieser Standorte den Abstand zwischen dem Flugzeug und der Station sowie die Abweichung zwischen der momentanen Bewegungsbahn des Flugzeugs und der Bewegungsbahn bei Ankunft an der Andockstation in einer bestimmten Ausrichtung des Flugzeugs errechnet und dem Piloten des Flugzeugs Angaben über die Abweichung zwischen der Position des Flugzeugs und der Bewegungsbahn der Ankunft an der Andockstation oder Sollwerte für das Anfahren der Station mitteilt, die aus dem Ergebnis der Rechnung erarbeitet werden.

2. Verfahren nach Anspruch 1, **dadurch gekennzeichnet, daß** die Infrarotsignatur sich auf Elemente des Flugzeugs mit stabilem Wärmekontrast nach der Landung, wie die Reifen oder andere geometrisch verteilte Elemente, stützt.

3. Verfahren nach Anspruch 2, **dadurch gekennzeichnet, daß** man die zum Bugfahrgestell gehörenden Reifen von den zu den Hauptfahrwerken gehörenden Reifen durch Identifikation, während das Flugzeug quer steht, und durch weitere Verfolgung unterscheidet.

4. Verfahren nach Anspruch 2 oder 3, **dadurch gekennzeichnet, daß**, sobald der aus dem Wärmebild errechnete Abstand (εl_{c}) kleiner als ein bestimmter Wert ist, man den Abstand zwischen dem Flugzeug und der Andockstation durch Laser-Entfernungsmessung mißt und die durch Entfernungsmessung gegebene Angabe (εlₜ) durch Vergleich mit dem errechneten Abstand (εl_{c}) bestätigt.

5. Verfahren nach Anspruch 4, **dadurch gekennzeichnet, daß** man das sich nähernde Flugzeug durch Vergleich seines vertikalen Profils, das durch Abtastungs-Entfernungsmessung bestimmt wird, mit einem Typenprofil und/oder durch Vergleich zwischen durch Entfernungsmessung erhaltenen Entfernungsangaben und durch Analyse des Infrarotbilds authentifiziert.

6. System zum Leiten eines Flugzeugs (16a) zu einer Andockstation (12), umfassend eine in Nähe der Andockstation angeordnete Wärmekamera (28) zum Erzeugen eines zweidimensionalen Bildes einer Zone der Annäherung an die Station; Mittel (34) zur Extraktion von Punkten und Linien in dem Wärmebild, das die Identifizierung eines Flugzeugs in der Annäherungszone gestattet, und von Angaben von Standorten in dem Bild; Rechenmittel (36), die die Merkmale des an der Station erwarteten Flugzeugs speichern und aus diesen Merkmalen und Standorten den Abstand zwischen dem Flugzeug und der Station sowie die seitliche Abweichung zwischen der momentanen Bewegungsbahn des Flugzeugs und einer nominalen Bewegungsbahn der Ankunft des Flugzeugs an der Andockstelle in einer bestimmten Ausrichtung liefern; und Mittel (18), um dem Piloten Angaben über diese Abweichung oder Sollwerte des Anfahrens der Station mitzuteilen, die aus dem Ergebnis der Rechnung ermittelt werden.

7. System nach Anspruch 6, **dadurch gekennzeichnet, daß** die Rechenmittel programmiert sind, um die Reifen der des Landefahrwerks zu identifizieren.

8. System nach Anspruch 6 oder 7, **dadurch gekennzeichnet, daß** es außerdem ein Laser-Entfernungsmesser (30) mit vertikaler Abtastung zur Messung des Abstands der Nase des Flugzeugs und ggf. des vertikalen Profils des Flugzeugs zur Authentifizierung durch Vergleich mit einem gespeicherten Profil aufweist.

9. System nach Anspruch 6, 7 oder 8, **dadurch gekennzeichnet, daß** die Mittel zum Mitteilen der Angaben eine Anzeigetafel (18) umfassen, die die Angaben des Typs des erwarteten Flugzeugs und der Abweichung von einer nominalen Annäherungs- und Anhalte-Bewegungsbahn tragen.

10. System nach Anspruch 9, **dadurch gekennzeichnet, daß** die Anzeigetafel eine Zone aufweist, die eine vertikale Mittellinie und einzeln beleuchtbare Streifen zu beiden Seiten der vertikalen Linie aufweist, um entweder eine Abweichung des Bugfahrgestells bezüglich der nominalen Bewegungsbahn oder die Richtung, in die das Bugfahrgestell eingeschlagen werden muß, anzuzeigen.

11. System nach Anspruch 10, **dadurch gekennzeichnet, daß** die Streifen je nach Größe der Abweichung eine andere Farbe haben.

12. System nach Anspruch 10 oder 11, **dadurch gekennzeichnet, daß** der Rechner vorgesehen ist, um auf der Tafel eine Angabe anzuzeigen, die einerseits von der Amplitude der Abweichung und andererseits von einer Bestimmung abhängt, ob das Flugzeug bestrebt ist, sich der nominalen Bewegungsbahn zu nähern oder sich von ihr zu entfernen.

## Claims

1. A method for guiding an airplane (16a) to a docking station (12) wherein:
- one forms a two-dimensional thermal IR image of a station approach zone from a determined point close to said docking station;
- one picks out the image occurrence and locations of characteristic features (24, 26) of the infrared signature of an airplane on its arrival into said approach zone;
- one computes a distance between the airplane and the station from stored characteristics of the airplane expected at said station and from said locations and a difference between a current path followed by the airplane and a set path for the airplane to arrive at the docking station in a determined orientation ; and one communicates indications to the pilot of the airplane concerning the difference between the actual position of the airplane and the set path for reaching the docking station or instructions on taxiing to the station, derived from a result of the computation.

2. Method according to claim 1, **characterised in that** the infrared signature is based on after landing stable thermal contrast features of the plane, such as the tires or other geometrically distributed elements.

3. Method according to claim 2, **characterised in that** the tires belonging to the front landing gear of the airplane and the tires belonging to the main landing gears are discriminated by identification when the airplane is seen laterally and then by tracking.

4. Method according to claim 2 or 3, **characterised in that**, after the distance computed from analysis of the thermal image (εl_{c}) has been found lower than a predetermined value, a distance between the airplane and the docking station is measured by laser telemetry and the indication (εlₜ) given by telemetry is confirmed by comparing said indication with the computed distance (εl_{c}).

5. Method according to claim 4, **characterised in that** a vertical profile of the airplane in approach is authenticated by comparing its scanning telemetry determined vertical profile with a predetermined stored profile and/or by comparing distance indications obtained by telemetry with distance information derived from analysis of the infrared image.

6. A system for guiding an airplane (16a) to a docking station (12) comprising a thermal camera (28) placed close to the docking station and suitable for forming a two-dimensional image of an approach zone to the station, means (34) for extracting points and lines from the thermal image permitting identification of an airplane in the approach zone and for locating the positions thereof in the image; computer means (36) storing the characteristics of the airplane expected at the station and responsive to said characteristics and said locations supplying the distance between the airplane and the station, and also a lateral difference between the instantaneous path of the airplane and a nominal path for airplane arrival at the docking station in a determined orientation; and means (18) for giving indications to the pilot of the airplane concerning said difference or advice on taxiing towards the station, as derived from results of computation.

7. System according to claim 6, **characterized in that** the computer means are programmed for identifying the tires of the wheels of the landing gear.

8. System according to claim 6 or 7, **characterized in that** it further comprises a laser range finder (30) with vertical scanning for measuring a distance of the nose of the airplane and possibly of the vertical profile of the airplane for authentication by comparison with a stored profile.

9. System according to claim 6, 7 or 8, **characterized in that** the means for giving indications comprise a display panel (18) carrying an indication of the type of the expected airplane and of the deviation from a nominal approach and arrival path.

10. System according to claim 9, **characterized in that** said display panel comprises a zone having a vertical mid-line and individually lightable strips located on either side of the vertical line for indicating either a deviation of the front gear as to the nominal path, or the direction into which the front wheel gear should be steered.

11. System according to claim 10, **characterized in that** the strips have a different colour according to the materiality of the deviation.

12. System according to claim 10 or 11, **characterized in that** the computer is provided for displaying on the panel an indication function on a one side of the amplitude of the deviation and on another side of a determination on if the airplane tends to move closer or apart of the nominal path.
